## Europäisches Patentamt
## European Patent Office
## Office européen des brevets

(19)

(11) Veröffentlichungsnummer : **0 050 711**
**B1**

(12)

# EUROPÄISCHE PATENTSCHRIFT

(45) Veröffentlichungstag der Patentschrift :
04.07.84

(21) Anmeldenummer : 81105546.6

(22) Anmeldetag : 15.07.81

(51) Int. Cl.³ : **F 16 K 31/02**, F 16 K 35/16//
**F02M51/00**

(54) Elektrisch ansteuerbare Ventileinrichtung.

(30) Priorität : 23.10.80 DE 3039915

(43) Veröffentlichungstag der Anmeldung :
05.05.82 Patentblatt 82/18

(45) Bekanntmachung des Hinweises auf die Patenterteilung : 04.07.84 Patentblatt 84/27

(84) Benannte Vertragsstaaten :
DE FR GB IT

(56) Entgegenhaltungen :
DE-C-   552 942
FR-A-   434 631
GB-A-   808 577
Automotive Engineering, Vol. 87, Nr. 7, July 1979, D. SCOTT, "Magnetic valve actuators vary timing", S. 77-80

(73) Patentinhaber : ROBERT BOSCH GMBH
Postfach 50
D-7000 Stuttgart 1 (DE)

(72) Erfinder : Babitzka, Rudolf
Birkenweg 11
D-7141 Kirchberg (DE)
Erfinder : Beck, Walter
Vöhingerweg 3
D-7141 Schwieberdingen (DE)
Erfinder : Linder, Ernst, Dipl.-Ing.
Uhlandstrasse 24
D-7130 Mühlacker (DE)

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung geht aus von einem Ventil gemäß dem Oberbegriff der Ansprüche 1 oder 2 der bekannt ist aus der GB-A-808.577. Bei einem solchen Rückschlagventil werden wegen des relativ langen Freigabeweges des Haltestempels bestenfalls Schaltzeiten von $10^{-3}$ Sekunden erreicht. Es hat sich gezeigt, daß diese Ansprechzeiten für einen Einsatz der Ventileinrichtung in Krafstoffeinspritzvorrichtungen für Verbrennungsmotoren nicht kurz genug sind. Bei solchen Anwendungsfällen ist man bestrebt, einen möglichst rechteckähnlichen Druck bzw. Mengenverlauf über der Zeit zu erreichen.

Außerdem kann der bekannte Haltestempel das Ventilglied nur in einer ganz bestimmten Lage festhalten. Ein bei längerem Gebrauch sich setzendes Ventil wird nicht mehr zuverlässig in seiner Schließstellung gesichert. Bei ansteigendem Druck des zu steuernden Mediums ergibt sich ein Leckstrom, bevor das Ventilglied zum Öffnen freigegeben werden soll.

Der Erfindung liegt die Aufgabe zugrunde, diese erwähnten Nachteile mittels eines stufenlos radial klemmbaren Ventilgliedes zu überwinden.

Diese Aufgabe wird erfindungsgemäß gelöst durch ein Ventil mit den kennzeichnenden Merkmalen der Ansprüche 1 und 2.

Durch die Konstruktion nach Anspruch 1 ist das Ventilglied in jeder Stellung festlegbar. Ein setzen des Ventilsitzes wird automatisch ausgeglichen. Es wird auch das Festlegen des Ventilgliedes in einer beliebigen Offenstellung möglich, um das Ventil als Drossel in den Strom des zu steuernden Mediums einzusetzen. Die Konstruktion nach Anspruch 2 hat die gleichen Vorteile wie die nach Anspruch 1. Zusätzlich sind mit ihr durch die sich addierenden Stellwege der zwei einander gegenüberliegend angeordneten Klemmvorrichtungen noch kürzere Schaltzeiten und eine bessere Freigabe des Ventilgliedes möglich. Letzteres verhindert zuverlässig Reibungsverluste durch Reibung zwischen den Klemmstempeln und dem Ventilglied.

Durch die in den Unteransprüchen aufgeführten Maßnahmen sind vorteilhafte Weiterbildungen und Verbesserungen des in den Ansprüchen 1 und 2 angegebenen Ventils möglich. Zur Erzielung von besonders kurzen Ansprechzeiten, etwa 40 bis $50 \cdot 10^{-6}$ Sekunden, kann der Klemmstempel zum Bewegen in seine Klemmstellung oder aus dieser heraus mit mehreren, mindestens aber zwei zu einer Säule geschichteten piezoelektrischen Scheiben verbunden sein.

Ausführungsbeispiele der Erfindung sind in der Zeichnung dargestellt und in der nachfolgenden Beschreibung näher erläutert. Es zeigen Figur 1 ein erstes Ausführungsbeispiel eines elektrisch ansteuerbaren Rückschlagventils, Figur 2 ein zweites Ausführungsbeispiel, Figur 3 ein drittes Ausführungsbeispiel, Figur 4 und Figur 5 zwei Ausführungsbeispiele einer Sitzanordnung der Ventileinrichtung und Figur 6 ein viertes Ausführungsbeispiel eines elektrisch ansteuerbaren Rückschlagventils.

Beschreibung der Ausführungsbeispiele.

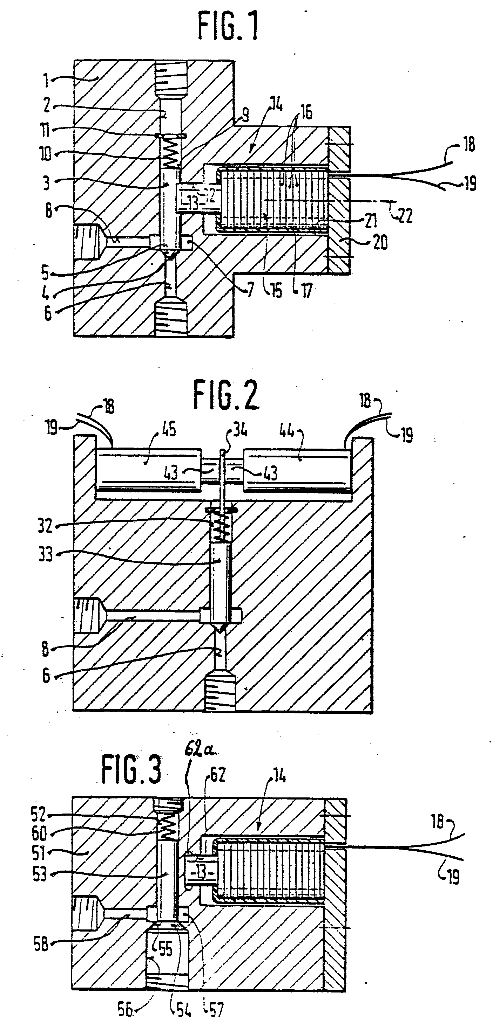

Das in Figur 1 der Zeichnung dargestellte Rückschlagventil hat ein Gehäuse 1, welches eine Ventilbohrung 2 aufweist. In der Ventilbohrung 2 ist dicht und gleitend ein kolbenartiges Ventilglied 3 geführt. Das Ventilglied 3 hat eine kegelförmige Stirnfläche 4, die mit einer entsprechenden, hohlkegelförmigen Sitzfläche 5 zusammenwirkt. Die Sitzfläche 5 ist am Übergang einer Einlaßbohrung 6 in die koaxial angeordnete Ventilbohrung 2, die einen größeren Durchmesser als die Einlaßbohrung 6 aufweist, angeordnet.

An das innere, der Einlaßbohrung 6 abgewandte Ende der Sitzfläche anschließend ist koaxial zur Ventilbohrung 2 eine Ringkammer 7 angeordnet, in welche eine Auslaßbohrung 8 einmündet. Einlaßbohrung 6 und Auslaßbohrung 8 haben den gleichen Durchmesser. An ihren Ausmündungen aus dem Gehäuse 1 sind sie ebenso wie die Ausmündung der Ventilbohrung mit je einem Befestigungsgewinde versehen.

Auf die der Stirnfläche 4 abgewandte Endfläche 9 des Ventilgliedes 3 stützt sich eine Druckfeder 10 ab, die mit ihrem anderen Ende gegen einen in der Ventilbohrung 2 angeordneten Anschlag 11 anliegt. Der Anschlag 11 ist hier als Sprengring ausgebildet, er kann aber natürlich auch anders ausgestaltet sein, z. B. als in das Befestigungsgewinde der Ventilbohrung 2 eingeschraubter Stopfen.

Etwa auf der Mitte der axialen Erstreckung des an der Sitzfläche 5 anliegenden Ventilgliedes 3 — so in Figur 1 dargestellt — mündet rechtwinklig zur Bewegungsrichtung des Ventilglieds 3 eine Führungsbohrung 12 ein, in der ein Klemmstempel 13 beweglich angeordnet ist. Der Klemmstempel 13 ist Teil eines elektrisch ansteuerbaren Stellers 14.

Der Steller 14 besteht aus mehreren zu einer Säule 15 geschichteten piezoelektrischen Scheiben 16, die in einem Isolierstoffgehäuse 17 angeordnet sind. Die piezoelektrischen Scheiben 16 sind elektrisch parallel geschaltet und können über Zuführungsleitungen 18, 19 an Gleichspannung gelegt werden. An seinem Fuß ist die Säule 15 an einem Deckel 20 befestigt, der eine Sackbohrung 21 im Gehäuse 1 verschließt. In den Boden der Sackbohrung 21 mündet die Führungsbohrung 12, in der sich der Klemmstempel 13 befindet.

Für den in Figur 1 der Zeichnung wiedergegebenen, spannungsfreien Zustand des Stellers 14 ist der Abstand zwischen der Außenfläche des Ventilglieds 3 und der leicht konkav ausgebildeten Stirnfläche des Klemmstempels 13 nur wenige Mikrometer groß.

Wird nun an die Zuführungsleitungen 18, 19 ein Gleichstrom angelegt, so dehnen sich die piezoelektrischen Scheiben 16 unter dem Einfluß des angelegten elektrischen Feldes bei gleichzeitiger Kontraktion ihrer Durchmesser in Richtung der Säulenachse 22 so, daß der Klemmstempel in Richtung auf das Ventilglied 3 verschoben wird. Der Klemmstempel 13 kommt dabei an der Außenfläche des Ventilglieds 3 zur Anlage und hält das Ventilglied 3 gegen die gegenüberliegende Wandung der Ventilbohrung 2. Durch die hohe Klemmkraft wird das Ventilglied 3 mit der gegenüberliegenden Wandung der Ventilbohrung 2 derart in kraftschlüssiger Berührung gehalten, daß eine Bewegung des Ventilglieds 3 in der Ventilbohrung 2 ausgeschlossen ist.

In der Einlaßbohrung 6 kann sich nun ein hoher Druck aufbauen, ohne daß das Ventilglied vom Sitz 5 abgehoben wird. Erst wenn die an der piezoelektrischen Säule 15 anliegende Gleichspannung abgeschaltet wird und die vom Klemmstempel 13 ausgeübte Klemmkraftwirkung aufgehoben wird, kann der in der Einlaßbohrung 6 herrschende höchst erreichbare Druck das Ventilglied 3 gegen die Kraft der Druckfeder 10 von seinem Sitz abheben. Die beim Bewegungsvorgang des Ventilglieds 3 erreichbare Geschwindigkeit — d. h. also die erreichbare Stellzeit — hängt nun nur noch von der Masse des Ventilglieds 3 ab. Wenn dafür gesorgt ist, daß das Ventilglied 3 extrem massearm aufgebaut ist, können extrem kurze Stellzeiten erreicht werden. Ansprechzeiten von 40 bis 50 Mikrosekunden sind auf diese Weise ohne weiteres erreichbar.

Bei dem in Figur 2 dargestellten, abgewandelten Ausführungsbeispiel weist das Ventilglied 33 eine mit ihm verbundene Federzunge 34 auf, welche aus der Ventilbohrung 32 herausragt. Anstelle eines gehäusefesten Anschlages ist bei diesem Ausführungsbeispiel dem ersten Steller 44, der dem Steller 14 des ersten Ausführungsbeispiels gemäß Figur 1 vollkommen entspricht, ein zweiter Steller 45 gleichen Aufbaues zumindest nahezu gleichachsig gegenüberliegend angeordnet. Die Klemmstücke 43 der beiden Steller 44, 45 klemmen die Federzunge 34 zwischen sich ein. Durch diese Anordnung ergibt sich ein größerer Gesamt-Stellweg und eine leichtere Zentrierung. Reibungsverluste durch Reibung zwischen den beiden Klemmstempeln 43 und der Federzunge 34 des Ventilgliedes 33 werden vermieden, wenn die Spannung der Steller 44, 45 abgeschaltet wird. Die Schaltzeit wird gegenüber der Ausführung nach dem Beispiel gemäß Figur 1 nochmals verkürzt.

Das in Figur 3 dargestellte dritte Ausführungsbeispiel eines elektrisch ansteuerbaren Ventils hat wiederum ein Gehäuse 51, in dem eine Einlaßbohrung 56 und eine Auslaßbohrung 58 angeordnet sind. Bei diesem Ausführungsbeispiel hat die Einlaßbohrung 56 einen grösseren Durchmesser als die Ventilbohrung 52, in der das Ventilglied 53 geführt ist. Am Übergang von der Einlaßbohrung 56 auf die Ventilbohrung 52 ist wiederum eine hohlkegelförmige Sitzfläche 55 ausgebildet. Mit dieser Sitzfläche 55 wirkt eine kegelförmige Dichtfläche 54 an einem pilzförmigen Ansatz des Ventilglieds zusammen. Eine Druckfeder 60 hält das Ventil in der offenen Stellung.

Bei diesem Ausführungsbeispiel ist die Führungsbohrung 62 für den Klemmstempel 13 des piezoelektrischen Stellers 14, der vollkommen demjenigen des ersten Ausführungsbeispiels entspricht, als Sackbohrung ausgestaltet, die nicht in die Ventilbohrung 53 einmündet. Am Grund der Sackbohrung 62 ist diese mit einem Einstich 62a versehen, wodurch die Gehäusewandung zur Ventilbohrung 53 besonders leicht elastisch nachgiebig wird.

In der in Figur 3 der Zeichnung dargestellten Stellung liegt an den Zuführungsleitungen 18, 19 eine Gleichspannung an, wodurch der Klemmstempel 13 das Ventilglied 53 in seiner von der Sitzfläche 55 abgehobenen Stellung in der Ventilbohrung 52 festklemmt. Der von der Einlaßbohrung 56 über den Ringraum 57 zur Auslaßbohrung 58 fliessende Fördervolumenstrom bildet an der von der Dichtfläche 54 und der Sitzfläche 55 gebildeten Drosselstelle einen Druck auf, der das Ventil zu schließen vermag. Erst bei Abschaltung der am Steller 14 anliegenden Gleichspannung, bei der der volle Drosseldruck anliegt, kann sich das Ventilglied 53 auf die Sitzfläche zu bewegen. Natürlich wird man auch bei diesem Ausführungsbeispiel zur Erreichung besonders kurzer Ansprechzeiten bestrebt sein, das Ventilglied 53 besonders massearm auszubilden.

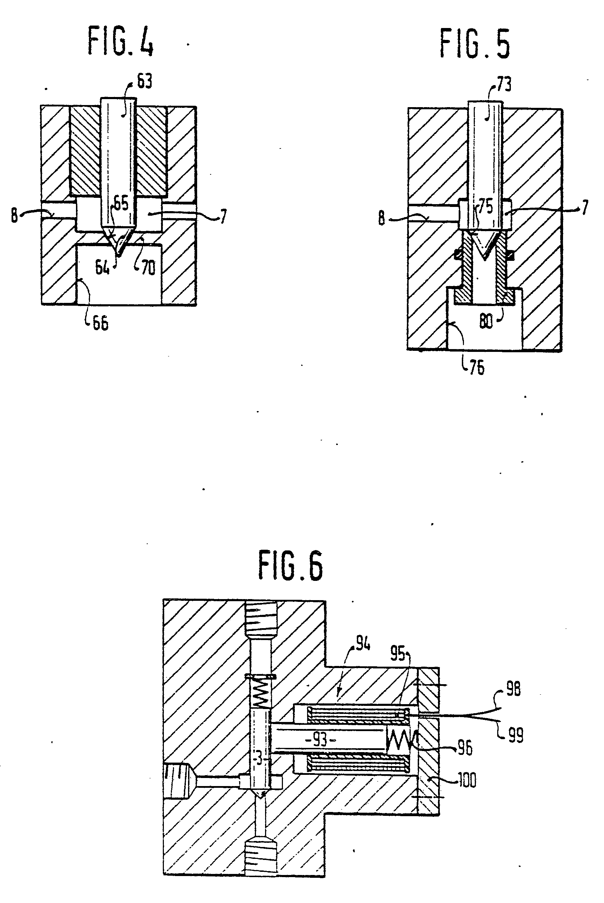

In den Figuren 4 und 5 sind zwei Varianten für die Ausbildung der Dichtefläche der in Figur 1 dargestellten Ventileinrichtung wiedergegeben. Diese Varianten sind besonders geeignet, um bei besonders hohen Drücken, wie sie etwa in Kraftstoffeinspritzanlagen vorkommen können, sicher zu dichten. Der Klemmstempel ist hier nicht dargestellt.

Bei dem Ventilglied 63 (Figur 4) arbeitet die kegelförmige Stirnfläche 64 mit einer kegelförmigen Sitzfläche 65 zusammen, die von der dem Ventilgleid 63 abgewandten Seite mit dem in der Einlaßbohrung 66 herrschenden Druck beaufschlagt wird. Da die Sitzfläche 65 in einer membranartig ausgebildeten elastisch nachgiebigen Gehäusewand 70 ausgebildet ist, hält bei geschlossenem Ventil der in der Einlaßbohrung 66 herrschende Druck die Sitzfläche 65 gegen die Stirnfläche 64 des Ventilglieds 63, wodurch eine sehr gute Abdichtung erreicht wird.

Das in Figur 5 dargestellte Ausführungsbeispiel arbeitet nach der gleichen Idee wie das in Figur 4 dargestellte Ausführungsbeispiel : Auch hier ist die Sitzfläche 75 von der dem Ventilglied 73 abgewandten Seite vom Mediumdruck in der Einlaßbohrung 76 beaufschlagt. Dazu ist die Sitzfläche 75 in eine axial beweglich angeordneten, hülsenförmigen Sitzkörper 80 ausgebildet. Der an der dem Ventilglied 73 abgewandten Stirnfläche am Sitzkörper 80 angreifende Mediumdruck hält somit die Sitzfläche 75 gegen die Stirnfläche 74 des Ventilglieds 73.

Die in Figur 6 dargestellte Ventileinrichtung ist im Prinip gleich derjenigen, die in Figur 1 dargestellt ist. Sie unterscheidet sich von der Ventileinrichtung gemäß Figur 1 nur dadurch, daß bei diesem Ausführungsbeispiel der Steller 94 als herkömmlicher Elektromagnet ausgestaltet ist. Die Klemmkraft, die das Ventilglied 3 in der Schließstellung an der Bewegung hindert, wird auch hier von einem Klemmstempel 93, der den Anker des Elektromagneten bildet, übertragen. Aufgebracht wird bei diesem Ausführungsbeispiel die Klemmkraft von einer sehr starken Druckfeder 96, die sich am Deckel 100 abstützt. Bei diesem Ausführungsbeispiel ist es notwendig, die Spule 95 des Elektromagneten zu erregen, indem an die Zuführungsleitungen 98, 99 eine Spannung angelegt wird. Im dann erregten Zustand wird der Anker 93 in das Innere der Spule 95 hereingezogen, wobei die Druckfeder 96 zusammengepreßt wird. Natürlich lassen sich mit diesem Ausführungsbeispiel nicht die äußerst kurzen Stellzeiten erreichen, die mit einem piezoelektrischen Steller, wie in den vorbeschriebenen Ausführungsbeispielen verwendet, erreichen. Gegenüber den herkömmlichen Elektromagnetventilen, die Stellzeiten von einer Millisekunde erreichen, lassen sich aber dennoch beträchtlich verkürzte Stellzeiten erreichen.

Diese Stellzeiten lassen sich noch verbessern, wenn der Elektromagnet gewindeartig verlaufende Vorsprünge am Anker aufweist, die in zugeordnete Ausnehmungen des Magnetkerns eintauchen. Dieser Elektromagnet ist an sich bekannt und nicht Gegenstand dieser Anmeldung (Automotive Engineering, July 1979, Vol. 87, Nr. 7, Seiten 77-80, D. Scott, «magnetic valve actuators vary timing»).

## Ansprüche

1. Elektrisch steuerbares Ventil mit einem in einer Ventilbohrung dicht und gleitend geführten, von einer vorzugsweise durch Druckbeaufschlagung durch das zu steuernde Medium erzeugten Stellkraft verschiebbaren, kolbenartigen Ventilglied (3, 53) und einer Haltevorrichtung mit einem senkrecht zum Ventilglied geführten Haltestempel (13, 93) für dieses Ventilglied, der elektrisch gesteuert in seine Haltestellung bzw. aus seiner Haltestellung heraus bewegbar ist, dadurch gekennzeichnet, daß der Haltestempel als Klemmstempel (13, 93) für das Ventilglied (3, 53) ausgebildet ist und einem gehäusefesten Anschlag, vorzugsweise einem Teil der Wand der Ventilbohrung (2, 52), so gegenüber gestellt ist, daß er das Ventilglied (3, 53) kraftschlüssig zwischen sich und diesem Anschlag festhalten kann.

2. Elektrisch ansteuerbares Ventil mit einem in einer Ventilbohrung dicht und gleitend geführten, von einer vorzugsweise durch Druckbeaufschlagung durch das zu steuernde Medium erzeugten Stellkraft verschiebbaren, kolbenartigen Ventilglied (33) und einer Haltevorrichtung mit einem senkrecht zum Ventilglied geführten Haltestempel (43) für dieses Ventilglied, der elektrisch gesteuert in seine Haltestellung bzw. aus seiner Haltestellung heraus bewegbar ist, dadurch gekennzeichnet, daß zwei Klemmvorrichtungen (44, 45) mit zwei als Klemmstempeln ausgebildeten Haltestempeln vorgesehen sind, die einander so gegenübergestellt sind, daß sie eine am Ventilglied (33) befestigte, zwischen die Klemmstempel (43) ragende Federzunge (34) zwischen sich kraftschlüssig festhalten können.

3. Ventil nach einem der Ansprüche 1 oder 2, dadurch gekennzeichnet, daß der Klemmstempel (93) als Anker eines Elektromagneten (94) ausgebildet ist.

4. Ventil nach Anspruch 3, dadurch gekennzeichnet, daß der Klemmstempel (93) in der Kernbohrung des Elektromagneten (94) durch eine gewindeähnliche Führung geführt ist.

5. Ventil nach einem der Ansprüche 1 oder 2, dadurch gekennzeichnet, daß der Klemmstempel (13, 43) mit einer Säule (15) aus übereinander geschichteten, piezoelektrischen Scheiben verbunden ist.

6. Ventil nach Anspruch 5, dadurch gekennzeichnet, daß die Längsachse der Säule (15) zumindest annähernd senkrecht zur Bewegungsrichtung des Ventilgliedes (3, 53, 63, 73) angeordnet ist.

7. Ventil nach Anspruch 1, dadurch gekennzeichnet, daß der Klemmstempel (13, 93) das Ventilglied (3, 63, 73) unmittelbar berührt.

8. Ventil nach Anspruch 1, dadurch gekennzeichnet, daß der Klemmstempel (13) hinter einem dünnen Teil der Wand der Ventilbohrung (52) angeordnet ist, das er federnd gegen das Ventilglied (53) drücken kann.

9. Ventil nach einem der vorhergehenden Ansprüche, dadurch gekennzeichnet, daß das Ventilglied gegen eine Kraft, insbesondere die Kraft einer Feder (10, 60), vom zu steuernden Medium bewegbar ist.

10. Ventil nach Anspruch 9, dadurch gekennzeichnet, daß das Ventilglied (3, 33) vom Druck des zu steuernden Mediums von seiner Sitzfläche (5, 55, 65, 75) angehoben wird.

11. Ventil nach Anspruch 9, dadurch gekennzeichnet, daß das durch die Feder von seiner kegelförmigen Sitzfläche (55) abgehobene, insbesondere eine sich in Schließbewegungsrichtung verjüngende kegelförmige Dichtfläche aufweisende Ventilglied (53), zusammen mit der Sitzfläche (55) eine Drosselstelle bildet und daß der an dieser Drosselstelle aufgebaute Druck das Ventilglied (53) auf die Sitzfläche (55) zu bewegt.

12. Ventil für hohe Drücke nach einem der vorhergehenden Ansprüche, dadurch gekennzeichnet, daß das Ventilglied (63, 73) eine kegelförmige Stirnfläche (64, 74) hat, die mit einer kegelförmigen Sitzfläche (65, 75) zusammenwirkt, die von der dem Ventilglied (63, 73) abgewandten Seite vom Mediumdruck beaufschlagt ist.

13. Ventil nach Anspruch 12, dadurch gekennzeichnet, daß die Sitzfläche (65) in einer membranartig ausgebildeten, elastisch nachgiebigen Gehäusewand (70) ausgebildet ist.

14. Ventil nach Anspruch 12, dadurch gekennzeichnet, daß die Sitzfläche (75) in einem axial beweglich angeordneten hülsenförmigen Sitzkörper (80) ausgebildet ist.

## Claims

1. Electrically controllable valve having a piston-like valve member (3, 53) which is tightly and slidingly guided in a valve bore and is movable by an adjustment force preferably generated by exposure to pressure by the medium to be controlled and a holding device with a holding ram (13, 93) for this valve member, which ram is guided at right angles to the valve member and can be moved under electrical control into and out of its holding position, characterised in that the holding ram is constructed as a clamping ram (13, 93) for the valve member (3, 53) and faces a stop fixed to the housing, preferably a part of the wall of the valve bore (2, 52), in such a manner that it can frictionally hold the valve member (3, 53) fixedly between the ram and this stop.

2. Electrically controllable valve having a piston-like valve member (33) which is tightly and slidingly guided in a valve bore and is movable by an adjustment force preferably generated by exposure to pressure by the medium to be controlled and a holding device with a holding ram (43) for this valve member, which ram is guided at right angles to the valve member and can be moved under electrical control into and out of its holding position, characterised in that two clamping devices (44, 45) are provided with two holding rams constructed as clamping rams (43), which rams face one another in such a manner that they are able frictionally to hold firmly, between them, a spring tab (34) which is attached to the valve member (33) and protrudes between the clamping rams (43).

3. Valve according to one of Claims 1 or 2, characterised in that the clamping ram (93) is constructed as the armature of an electromagnet (94).

4. Valve according to Claim 3, characterised in that the clamping ram (93) is guided by a threadlike guide in the core bore of the electromagnet (94).

5. Valve according to one of Claims 1 or 2, characterised in that the clamping ram (13, 43) is connected to a column (15) of piezoelectric discs stacked one above the other.

6. Valve according to Claim 5, characterised in that the longitudinal axis of the column (15) is located at least approximately at right angles to the direction of movement of the valve member (3, 53, 63, 73).

7. Valve according to Claim 1, characterised in that the clamping ram (13, 93) directly touches the valve member (3, 63, 73).

8. Valve according to Claim 1, characterised in that the clamping ram (3) is located behind a thin portion of the wall of the valve bore (52) so that it can press resiliently against the valve member (53).

9. Valve according to one of the preceding claims, characterised in that the valve member can be moved by the medium to be controlled counter to a force, in particular the force of a spring (10, 60).

10. Valve according to Claim 9, characterised in that the valve member (3, 33) is lifted off its seating surface (5, 55, 65, 75) by the pressure of the medium to be controlled.

11. Valve according to Claim 9, characterised in that the valve member (53) which is lifted off its conical seating surface (55) by the spring and in particular has a conical sealing face tapering in the direction of the closing movement forms, together with the seating surface (55), a throttle point, and that the pressure build up at this throttle point moves the valve member (53) towards the seating surface (55).

12. Valve for high pressures, according to one of the preceding claims, characterised in that the valve member (63, 73) has a conical end face (64, 74) which cooperates with a conical seating surface (65, 75) which is subjected to the pressure of the medium from the side facing away from the valve member (63, 73).

13. Valve according to Claim 12, characterised in that the seating surface (65) is formed in a resiliently yielding housing wall (70) of membrane-like construction.

14. Valve according to Claim 12, characterised in that the seating surface (75) is formed in an axially movably arranged sleeve-like seating body (80).

## Revendications

1. Soupape susceptible d'être commandée électriquement avec un organe de soupape (3, 53) en forme de piston, guidé de façon étanche par glissement dans un alésage de soupape, et susceptible d'être déplacé par un effort de positionnement produit de préférence par la pression exercée par le fluide à commander, et avec un dispositif de maintien comportant, guidé perpendiculairement à l'organe de soupape, un poinçon de maintien (13, 93) pour cet organe de soupape et qui, en étant guidé électriquement, est susceptible d'être déplacé dans sa position de maintien ou bien en dehors de cette position, soupape caractérisée en ce que le poinçon de maintien revêt la forme d'un poinçon de serrage (13, 93) pour l'organe de soupape (3, 53) et est positionné en face d'une butée solidaire du boîtier, de préférence une partie de la paroi de l'alésage de soupape (2, 52), de façon qu'il puisse maintenir fermement l'organe de soupape (3, 53) par adhérence entre lui et cette butée.

2. Soupape susceptible d'être commandée électriquement avec un organe de soupape (33) en forme de piston guidé de façon étanche par glissement dans un alésage de soupape, et susceptible d'être déplacé par un effort de positionnement produit de préférence par la pression exercée par le fluide commandé, et avec un dispositif de maintien comportant, guidé perpendiculairement à l'organe de soupape, un poinçon de maintien (43) pour cet organe de soupape, qui, en étant commandé électriquement, est susceptible d'être déplacé dans sa position de maintien, ou bien en dehors de cette position, soupape caractérisée en ce qu'il est prévu deux dispositifs de serrage (44, 45) avec deux poinçons de maintien revêtant la forme de poinçons de serrage (43) qui sont positionnés l'un en face de l'autre de façon qu'ils puissent maintenir fermement entre eux par adhérence une languette élastique (34) fixée sur l'organe de soupape (33) et faisant saillie entre les poinçons de serrage (43).

3. Soupape selon une des revendications 1 ou 2, caractérisée en ce que le poinçon de serrage (93) est l'armature d'un électro-aimant (94).

4. Soupape selon la revendication 3, caractérisée en ce que le poinçon de serrage (93) est guidé dans l'alésage du noyau de l'électro-aimant (94) par un guidage en forme de filetage.

5. Soupape selon une des revendications 1 ou 2, caractérisée en ce que le poinçon de serrage (13, 43) est relié à une colonne (15) constituée de disques piézo-électriques empilés les uns sur les autres.

6. Soupape selon la revendication 5, caractérisée en ce que l'axe longitudinal de la colonne (15) est disposé au moins de façon approximative perpendiculairement à la direction de déplacement de l'organe de soupape (3, 53, 63, 73).

7. Soupape selon la revendication 1, caractérisée en ce que le poinçon de serrage (13, 93) est en contact direct avec l'organe de soupape (3, 63, 73).

8. Soupape selon la revendication 1, caractérisée en ce que le poinçon de serrage (13) est disposé derrière une partie mince de la paroi de l'alésage de soupape (52) qu'il peut presser élastiquement contre l'organe de soupape (53).

9. Soupape selon une des revendications précédentes, caractérisée en ce que l'organe de soupape est susceptible d'être déplacé contre un effort, notamment l'effort exercé par un ressort (10, 60), par le fluide à commander.

10. Soupape selon la revendication 9, caractérisée en ce que l'organe de soupape (3, 33) est soulevé de sa surface de siège par la pression du fluide à commander.

11. Soupape selon la revendication 9, caractérisée en ce que l'organe de soupape (53) soulevé par le ressort de sa surface conique de siège (55), et comportant notamment une surface conique d'étanchement allant en se rétrécissant dans le sens de déplacement pour la fermeture, constitue avec la surface de siège (55) un point d'étranglement, et que la pression établie en ce point d'étranglement déplace l'organe de soupape (53) vers la surface de siège (55).

12. Soupape pour hautes pressions selon une des revendications précédentes, caractérisée en ce que l'organe de soupape (63, 73) a une face frontale conique (64, 74) coopérant avec une surface de siège conique (65, 75) qui est sollicitée par la pression du fluide du côté opposé à l'organe de soupape (63, 73).

13. Soupape selon la revendication 12, caractérisée en ce que la surface de siège (65) est ménagée dans une paroi (70) du boîtier constituant une sorte de membrane et déformable élastiquement.

14. Soupape selon la revendication 12, caractérisée en ce que la surface de siège (75) est réalisée dans un corps de siège en forme de douille (80) déplaçable axialement.

# FIG.1

# FIG.2

# FIG.3

# FIG.4

# FIG.5

# FIG.6